# EUROPEAN PATENT SPECIFICATION

(11) **EP 3 582 949 B1**
(45) Date of publication and mention of the grant of the patent: **24.01.2024**
(21) Application number: 18708300.1
(22) Date of filing: 20.02.2018
(51) Int. Cl.: B29C 64/171

(54) **THREE DIMENSIONAL PRINTER RESIN REPLENISHMENT APPARATUS AND METHOD**
VORRICHTUNG UND VERFAHREN ZUR AUFFÜLLUNG VON HARZ EINES DREIDIMENSIONALEN DRUCKERS
APPAREIL ET PROCÉDÉ DE REMPLISSAGE D'UNE RÉSINE D'IMPRIMANTE TRIDIMENSIONNELLE

(30) Priority: 20.02.2017 US 201762460947 P
(43) Date of publication of application: 25.12.2019
(73) Proprietor: 3D Systems, Inc., Rock Hill, SC 29730 (US)
(72) Inventor: TURNER, Peter, Scott, Venice CA 90291 (US)
(74) Representative: dompatent von Kreisler Selting Werner - Partnerschaft von Patent- und Rechtsanwälten mbB
(86) International application number: PCT/US2018/018664
(87) International publication number: WO 2018/152482

(56) References cited:
- WO-A1-2017/112653
- US-A- 5 658 412
- US-A- 6 030 199
- US-A1- 2013 295 212

## Description

### Field of the Invention

The present disclosure concerns an apparatus and method for fabrication of solid three dimensional (3D) articles of manufacture from energy curable materials. More particularly, the present disclosure concerns a way of optimizing the speed and output quality of a three dimensional (3D) printer that utilizes photocurable resins.

### Background

Three dimensional (3D) printers are in rapidly increasing use. One class of 3D printers includes stereolithography printers having a general principle of operation including the selective curing and hardening of radiation curable (photocurable) liquid resins. A typical stereolithography system includes a containment vessel holding the curable resin, a movement mechanism coupled to a support surface, and a controllable light engine. The stereolithography system forms a three dimensional (3D) article of manufacture by selectively curing layers of the photocurable resin.

In one system embodiment the vessel includes a transparent sheet that forms part of a lower surface of the vessel. The support surface is positioned above and in facing relation with the transparent sheet. The following steps take place: (1) The movement mechanism positions the support surface whereby a thin layer of the photocurable resin resides between the support surface and the transparent sheet. (2) The light engine transmits pixelated light up through the transparent sheet to selectively cure a layer of the photocurable resin onto the support surface. (3) The movement mechanism then incrementally raises the support surface. Steps (2) and (3) are repeated to form a three dimensional (3D) article of manufacture having a lower face in facing relation with the transparent sheet. US 2013 295212 A1 discloses such a system.

One challenge is the "fouling" of the transparent sheet with cured polymer. Ideally the polymer would only cure on the support surface and the lower face of the 3D article of manufacture. However, some polymer may cure upon the lower window. Over time, the cured polymer on the window will interfere with proper operation of the 3D printer. Also, the lower face may stick to the lower window. To overcome this problem, various solutions have been deployed including providing a release coating on the lower window and/or using chemical inhibitors to prevent the resin from curing on or near the lower window.

Another challenge with such a system is how to maintain a supply of fresh resin at a build plane proximate to the lower face. When the lower face of the 3D article of manufacture has a solid and large cross sectional area, the resin can become depleted at the build plane. Up and down motion of the lower face of the 3D article of manufacture may be used to replenish the thin layer of resin. This up and down motion can impart stresses upon the lower face of the 3D article of manufacture, resulting in a decrease in quality. Slowing down the up and down motion can reduce these stresses but will result in longer processing times. What is needed is a system that provides high speed operation without a reduction in quality of the 3D article of manufacture.

### Brief Description of the Figures

FIG. 1 is a schematic block diagram depicting an exemplary three dimensional (3D) printing system.
FIG. 2 is a flowchart depicting an exemplary method of operating a three dimensional (3D) printing system.
FIG. 3 is an exemplary schematic timing diagram depicting a height H(t) versus time t of a lower face of a three dimensional (3D) object of manufacture above a transparent sheet.
FIG. 4 is an exemplary schematic timing diagram depicting a height H(t) and a force F(t) versus time t. H(t) is a height of a lower face of a three dimensional (3D) object of manufacture above a transparent sheet. F(t) is a dynamically varying vertical force being exerted on the three dimensional (3D) object of manufacture.
FIG. 5 is a top view of an exemplary vessel containing resin and a three dimensional (3D) object of manufacture having a solid circular cross section.
FIG. 6 is a side cross sectional view of an exemplary vessel containing resin and a three dimensional (3D) object of manufacture.

### Summary

The present invention is defined by the scope of the appended claims.

In one implementation the light engine includes a light source and a spatial light modulator. The spatial light modulator operates to selectively control pixel elements across a build plane over which the resin is selectively cured. In one embodiment the spatial light modulator is a digital mirror device. The spatial light modulator receives unprocessed light from the light source and reflects or transmits pixelated and processed light. The light engine includes optics that deliver the processed light to the build plane within the resin and proximate to the lower face of the 3D article of manufacture.

In another implementation the sensor is a pressure-sensitive transducer that can sense dynamic changes in compression and/or tension. The transducer can be mounted whereby it directly senses vertical forces applied to the fixture.

In yet another implementation the controller is electrically and/or wirelessly coupled to the light engine, the movement mechanism, and to the sensor. The controller includes a processor coupled to an information storage device. The information storage device includes a non-transient or non-volatile storage device that stores instructions that, when executed by the processor, process signals from the sensor and control the light engine and the movement mechanism. The controller can be contained in a single IC (integrated circuit) or multiple ICs. The controller can be disposed at one location or distributed in multiple locations within the three dimensional printing system.

In a further implementation a translation velocity of the lower face of the 3D article of manufacture is adjusted in real time based upon a signal from the sensor. In a first embodiment the translation velocity is decreased if the signal from the sensor indicates that the dynamic force has a magnitude that exceeds a designated upper control limit. In a second embodiment the translation velocity is decreased if the signal from the sensor indicates that the dynamic force versus time has a magnitude that exceeds a designated upper control limit. In a third embodiment the translation velocity is increased if the signal from the sensor indicates that the dynamic force has a magnitude that is less than a designated lower control limit. In a fourth embodiment the translation velocity is increased if the signal from the sensor indicates that a slope of the dynamic force versus time is less than a lower control limit.

In a yet further implementation the dynamic force versus time rises and then falls while the lower face of the 3D article of manufacture is being translated upwardly away from the transparent sheet. The upward translation can be halted in real time in response to a real time analysis of the dynamic force versus time. When the magnitude of the dynamic force begins to rapidly fall the upward translation can be halted.

According to the invention, the controller is configured to define the pump cycle based upon a parametric correlation that correlates pump cycle parameters with at least a geometry of the lower face of the 3D article of manufacture. The pump cycle parameters include a pump distance D and a translation velocity of the lower face of the 3D article of manufacture. In a first embodiment a lookup table correlates a pump cycle parameter with a lower face geometric parameter. In the first embodiment the lookup table is updated based upon an analysis of the signal from the sensor. In a second embodiment a functional relationship relates a pump cycle parameter to a lower face geometric parameter. In the second embodiment the functional relationship is updated based upon an analysis of the signal from the sensor.

In yet another implementation a resin flow regime can be defined between the lower face of the 3D article of manufacture and the transparent sheet. The resin flow regime can be laminar or turbulent based upon a Reynolds number. The pump cycle is updated to maximize the Reynolds number while maintaining laminar flow and avoid turbulent flow. The pump cycle can also have an upper limit on the dynamic force for a very viscous resin.

In a further implementation step (a) includes incrementally raising the lower face by a distance d. In a first embodiment, D is at least equal to four times d. In a second embodiment, D is at least equal to 10 times d. In a third embodiment, D is at least equal to 50 times d. In a fourth embodiment, D is at least equal to 100 times d.

In a further implementation step (a) includes incrementally raising the lower face by a distance d. In some embodiments, the distance d is in a range of 10 to 100 microns. The distance d can be about 30 microns in certain embodiments. The distance D varies depending on factors such as the geometry of the lower face. In some embodiments, the distance D equals at least four times d.

### Detailed Description of the Preferred Embodiments

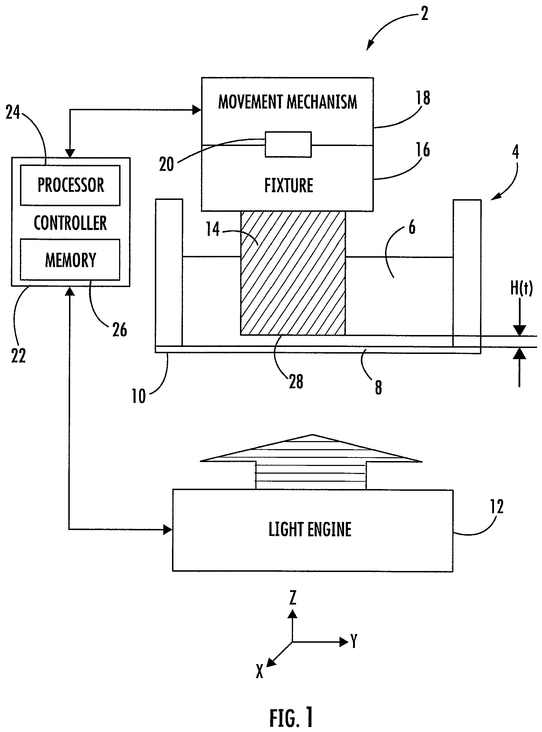

FIG. 1 is a schematic block diagram representation of an embodiment of a three dimensional (3D) printing system 2. Indicated in FIG. 1 are mutually perpendicular axes X, Y, and Z. Axes X and Y are lateral axes. In some embodiments X and Y are also horizontal axes. Axis Z is a central axis. In some embodiments Z is a vertical axis. In some embodiments the direction +Z is generally upward and the direction -Z is generally downward.

Three dimensional printing system 2 includes a vessel 4 containing a photocurable resin 6. Vessel 4 includes a transparent sheet 8 that defines at least a portion of a lower surface 10 of vessel 4. A light engine 12 is disposed to project light up through the transparent sheet 8 to solidify layers of photocurable resin 6 to progressively form a three dimensional article of manufacture 14. The three dimensional article of manufacture 14 is attached to and thereby supported by a fixture 16. A movement mechanism 18 is coupled to fixture 14 for translating the fixture 14 along the vertical axis Z.

Three dimensional printing system 2 includes a sensor 20 that is configured to monitor a dynamic vertical force exerted on the three dimensional article of manufacture 14. In one embodiment sensor 20 is a transducer disposed on fixture 16 and/or movement mechanism 18 to sense vertical forces applied to fixture 16. The dynamic vertical force is primarily generated by motion of the three dimensional article of manufacture 14 through the resin 6.

A controller is 22 is electrically or wirelessly coupled to the light engine 12, the movement mechanism 18, and the sensor 20. Controller 22 includes a processor 24 coupled to an information storage device 26. The information storage device 26 includes a non-transient or non-volatile storage device that stores instructions that, when executed by the processor 24, analyze and process signals from the sensor 20 and control the light engine 12 and the movement mechanism 18. Controller 22 is contained in a single IC (integrated circuit) or multiple ICs. Controller 22 can be disposed at one location or distributed among multiple locations in three dimensional printing system 2.

The three dimensional article of manufacture 14 has a lower face 28 that faces the transparent sheet 8. As light engine 12 selectively applies light energy through the transparent sheet 8 it selectively polymerizes resin proximate to a "build plane" which can be coincident or proximate to the lower face 20. This has the effect of selectively building a layer of resin onto lower face 28. The movement mechanism, under control of controller 22, controls a distance H(t) between the lower face 28 and the transparent sheet 8.

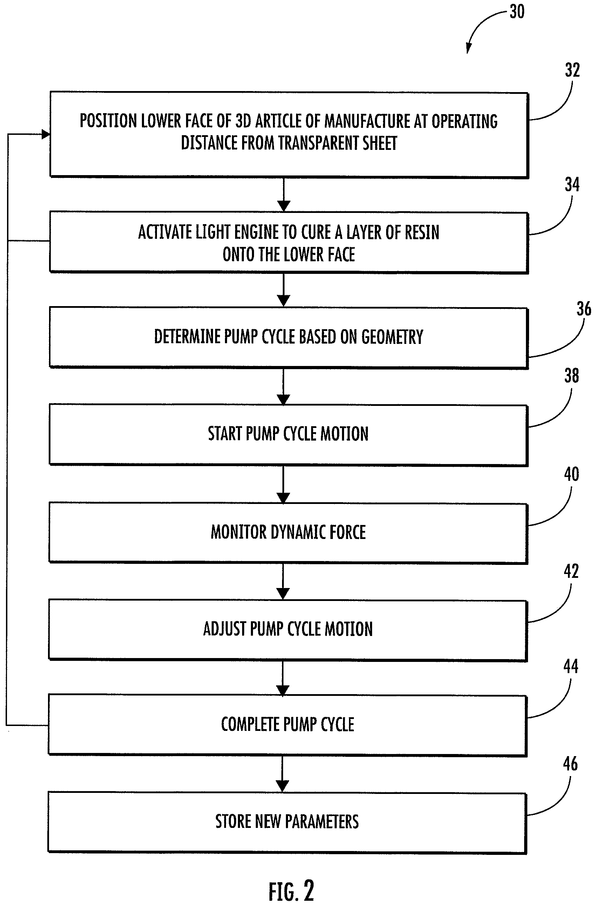

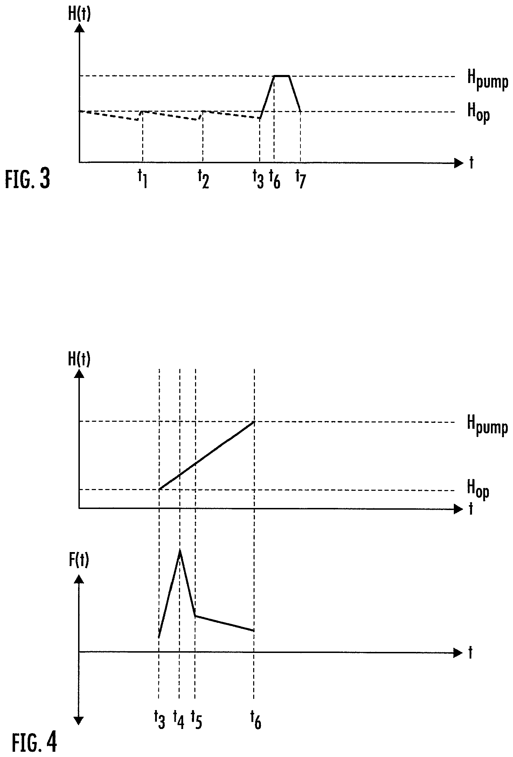

FIG. 2 is a flowchart depicting an exemplary method 30 of forming a three dimensional article of manufacture 14 with three dimensional (3D) printing system 2. FIG. 3 is an exemplary graph of H(t) versus time t that can correspond to a part of method 30. The two will be discussed at the same time.

According to step 32 the lower face 28 of three dimensional article of manufacture 14 is positioned at an operating distance or height Hₒₚ above the transparent sheet 8. Step 32 is depicted by the left side of the FIG. 3 graph at t = 0.

According to step 34, the light engine 12 is activated to cure a layer of resin onto the lower face 28. Step 34 corresponds to the dashed line between t = 0 and t = t1 in FIG. 3. After the cure of step 34, the distance H(t) is reduced by a thickness of photocure resin that has been added onto lower face 28. The method then proceeds back to step 32 in which the lower face is raised back to an operating height Hₒₚ.

Steps 32 and 34 are repeated one or more times times before proceeding to step 36. FIG. 3 depicts these as being repeated twice but the number of times steps 32 and 34 are repeated can vary. They may be not be repeated at all or can be repeated 1, 2, 3, 4, 5, 6, 7, or more times before proceeding to step 36. The number of repeats can be a function of various factors such as the geometry of the lower face 28, resin 6 rheology, and cure depth into the resin. At or around time t1 and time t2 the lower face 28 is incrementally raised by a distance d to provide the proper operating height Hₒₚ before operating the light engine.

When the lower face 28 has a relatively large geometry the resin 6 may not completely refill between the lower face 28 and the transparent sheet 8 between t = 0 and t = t3. At some point the quality of added layers of resin is impaired. Then a "pump cycle" can be performed. An exemplary pump cycle is illustrated according to FIG. 3 between time t = t3 and t = t7. The lower face 28 is raised to H(t) = Hₚᵤₘₚ above the transparent film 8. The distance that lower face 28 is raised between t = t3 and t = t6 will be referred to as pump distance D.

According to step 36 a pump cycle is determined based at least partly upon the geometry of the lower face 28. The pump cycle can also be a function of resin properties such as viscosity. The pump cycle defines D and a velocity profile or curve including height H(t) versus time t between t = t3 and t = t7.

According to step 38 the movement mechanism 18 begins the pump cycle. According to step 40 a signal from sensor 20 is monitored concurrently with the pump cycle. The signal is indicative of a dynamic or motion-induced force upon the three dimensional article of manufacture 14 by the resin 6. An "idealized" dynamic force profile F(t) versus time t is illustrated in FIG. 4. This is idealized because a real graph may have other "wiggles" that are not depicted, but the major force transitions are shown. The top graph of FIG. 4 depicts H(t) versus time t between t = t3 and t = t6. While FIGS. 3 and 4 depict motions as linear (constant slope) between various times, this is for illustrative purposes. The actual motion may be non-linear in order to optimize a resin flow regime between the lower face 28 and the transparent sheet 8.

The bottom graph of FIG. 4 depicts the dynamic vertical force F(t) detected by sensor 20 between times t = t3 and t = t6. Between t = t3 and t = t4, a viscous drag of the resin 6 causes the transparent sheet 8 to be bent upwardly as the lower face 28 is raised. The transparent sheet 8 pulls back elastically and results in an increasing force. When the resin 6 finally begins to substantially flow between the lower face 28 and the transparent sheet 8, the force F(t) begins to rapidly decline as depicted between t = t4 and t = t5. Eventually the force F(t) drops more slowly between t = t5 and t = t6 as the lower face 28 is farther from the transparent sheet 28 and the force is due to viscous drag through the resin 6.

According to step 42, the pumping motion can be adjusted in real time in response to and concurrently with analyzing the step 40 signal. Step 42 does not necessarily occur unless the analysis determines that the force curve F(t) is not optimal. There are a number of embodiments for which step 42 is invoked and what follows are some exemplary embodiments.

According to a first embodiment, there is an upper control limit for the force F(t) versus time t between t3 and t4. Too high of a force can result in damage to the three dimensional article of manufacture 14 and possibly even to the transparent sheet 8. If the analysis shows that a magnitude of F(t) has exceeded the upper control limit then the slope of H(t) versus t (which equals the upward translation velocity of the fixture 16) is reduced in order to reduce a peak force for the pump cycle (shown as a peak of the curve in FIG. 4).

According to a second embodiment, there is an upper control limit for the slope of the force F(t) versus time t between times t3 and t4. If the analysis of step 40 indicates that a magnitude the slope exceeds the upper control limit, then the upward translation velocity (the slope of H(t) versus t) is reduced in real time in order to reduce the peak force for the pump cycle.

According to a third embodiment, there is a lower control limit for the force F(t) at a particular time t. Too low of a force F(t) indicates an opportunity to increase a build rate for the three dimensional article of manufacture 14 without adverse effects. If the analysis of step 40 indicates that a magnitude of the force F(t) is below the lower control limit, then the rate of upward translation of the lower face 28 (which equals the slope of height H(t) versus time t) is increased.

According to a fourth embodiment, there is a lower control limit for the slope of F(t) versus time t between t3 and t4. Too low of a slope indicates an opportunity to increase a build rate for the three dimensional article of manufacture 14 without adverse effects. If the analysis shows that the F(t) versus t curve slope is below the lower control limit then the rate of upward translation of the lower face 28 is increased.

According to a fifth embodiment, the pump cycle being executed is based upon an expected graph of force F(t) versus time t. Based on the analysis it may be determined that the time t4 occurs earlier than expected - in other words, the force F(t) begins to decline rapidly earlier than expected. Then the pump cycle can be temporally shortened by reducing times t = t6 and t = t7. Doing so increases the build rate for the three dimensional article of manufacture 14 while still assuring a complete reflow of resin between the lower face 28 and the transparent sheet 8.

According to step 44, the pump cycle from t = t3 to t = t7 is completed. Step 44 actually coincides with step 32 at which the lower face is again positioned at the operating distance Hₒₚ. The cycle of steps 32 to 44 can be repeated until the three dimensional article of manufacture 14 is completed.

According to step 46 a new parametric correlation is stored that correlates the pump cycle with at least the geometry of the lower face 28 and possibly other parameters. This new parametric correlation can be used for subsequent repeats of the steps 32 to 44. This parametric correlation can take on various embodiments.

In a first embodiment, the parametric correlation is defined by a lookup table. According to the first embodiment, step 46 includes modifying the lookup table correlating the pump cycle to various input variables such as the geometry of lower face 28.

In a second embodiment the parametric correlation is defined by one or more functional relationships correlating the pump cycle to the geometry of lower face 28. The functional relationship includes function parameters such a multiplicative constants. According to the second embodiment, step 46 includes modifying one or more of the function parameters and thereby modifying the functional relationship.

In a third embodiment, the parametric correlation is defined by a combination of one or more lookup tables and one or more functional relationships. Step 46 can include modifications to a lookup table and/or a functional relationship.

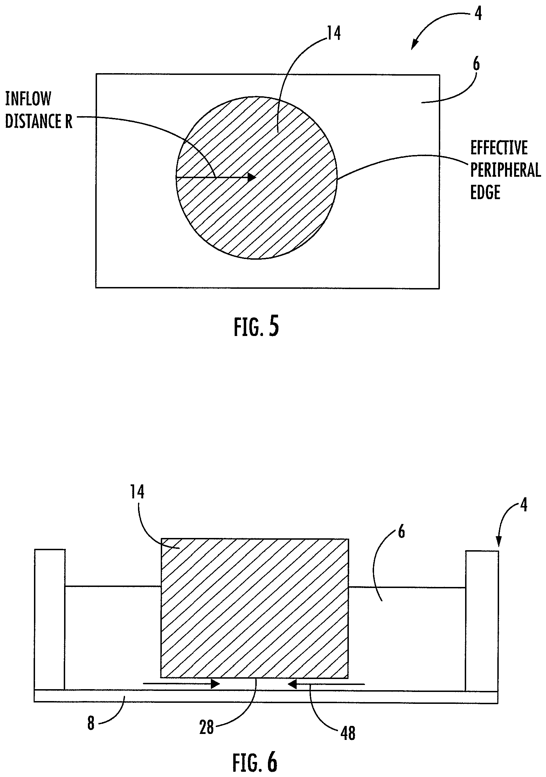

FIGS. 5 and 6 are simplified diagrams for illustrating a simple geometry of a cylindrical three dimensional article of manufacture 14 for the purpose of discussing the geometry of lower face 28. FIG. 5 is a top view and FIG. 6 is a side view of the vessel 4 containing resin 6 and three dimensional article of manufacture 14. The required pump distance D correlates increasingly with an inflow radius R which is a lateral radius of the circular three dimensional article of manufacture 14. Thus for such a simple geometry a lookup table can correlate the pump distance D with R. More complicated geometries won't have such a simple correlation, but for such geometries an equivalent inflow radius R can be estimated. By utilizing the method 30, the correlation can be automatically improved over time for a given resin 6.

As the lower face 28 of the three dimensional article of manufacture 14 is raised above the transparent sheet 8, resin inflows as indicated by arrows 48. If the translation velocity H(t) versus t is of a low enough magnitude, the resin flow 48 regime will be laminar and flow vectors will tend to be uniformly radially inward. But as H(t) versus t is increased above a certain threshold, the resin flow 48 regime becomes turbulent and irregular. Such a flow regime is not optimal. The optimal resin flow 48 rate is an upper limit for laminar flow before the flow becomes turbulent. The method 30 including steps 42 and 46 can be performed to provide the highest magnitude of translation velocity (height H(t) versus time t) for which the resin flow 48 is laminar and an upper limit on the dynamic force is not exceeded.

Variables that define the pump cycle can vary dramatically. Operating with optimal laminar flow requires the correlation of a number of variables. The effective radius (inflow distance) R of a given layer of material can vary dramatically. A smaller effective radius can be in the range of 1 to 5 millimeters. A larger effective radius range can be in a range of 5 to 500 millimeters or more.

Rheological properties of the resin 6 combine with the geometry to determine an optimal pump cycle. The pump cycle may include a pump distance as small as 100 to 300 microns or as large a 500 to 5000 microns depending on lower face 28 geometry, resin 6 rheology, and possibly other factors. The translation velocity (slope of height H(t) versus time t) can also vary widely. The acceptable maximum force F(t)ₘₐₓ is a function of factors including the resin 6 rheology and the lower face 28 geometry. For a given resin rheology this can be determined by finding the boundaries of the force F(t) for a given geometry.

The specific embodiments and applications thereof described above are for illustrative purposes only and do not preclude modifications and variations encompassed by the scope of the following claims.

## Claims

1. A three dimensional (3D) printer comprising:
a vessel for containing a liquid resin, the vessel having a transparent sheet through which the resin can be illuminated;
a light engine disposed to selectively illuminate the resin through the transparent sheet;
a fixture for supporting a 3D article of manufacture whereby a lower face of the 3D article of manufacture is immersed in the resin in facing relation with the transparent sheet;
a movement mechanism for controllably translating the fixture whereby a vertical distance between the lower face of the 3D article of manufacture and the transparent sheet can be controlled;
a sensor configured to monitor a dynamic vertical force on the lower face;
a controller configured to:
(a) position the lower face of the 3D article of manufacture at an operating distance from the transparent sheet;
(b) activate the light engine to selectively cure a layer of resin onto the lower face;
(c) repeat (a) and (b) one or more times; **characterized in that** the controller is further configured to:
(d) activate the movement mechanism to translate the lower face upwardly by a distance of D and then downwardly to the operating distance pursuant to a pump cycle;
(e) concurrent with (d), monitor a signal from the sensor that is indicative of a dynamic force being exerted on the lower face of the 3D article of manufacture;
(f) update at least one pump cycle parameter based at least partly upon an analysis of the signal from the sensor; and
(g) repeat steps (a) to (f) until the 3D article of manufacture is completed; and wherein the controller is configured to define the pump cycle based upon a parametric correlation that correlates the pump cycle with at least a geometry of the 3D article.

2. The three dimensional (3D) printer of claim 1 wherein the signal from the sensor is analyzed and the parametric correlation is updated in response.

3. The three dimensional (3D) printer of claim 2 wherein updating the parametric correlation is based upon modifying a lookup table.

4. The three dimensional (3D) printer of claim 2 wherein updating the parametric correlation is based upon pointing to a new lookup table.

5. The three dimensional (3D) printer of claim 2 wherein updating the parametric correlation is based upon an adjustment of a functional parameter.

6. The three dimensional (3D) printer of claim 2 wherein the parametric correlation is based upon a multiplicative parameter that is updated in response to the analyzed signal.

7. A method of manufacturing a 3D article using a 3D printer having including a vessel containing resin and having a transparent sheet at a lower portion of the resin comprising:
(a) positioning a lower face of the 3D article proximate to a build plane above the transparent sheet;
(b) projecting pixelated light up through the transparent sheet to selectively cure resin onto the lower face;
(c) repeating (a) and (b) one or more times, **characterized in that** the method further comprises the steps of:
(d) executing a pump cycle which includes raising the lower face above the build plane and then lowering the lower face to be proximate to the build plane whereby resin is replenished between the lower face and the transparent sheet;
(f) concurrent with the pump cycle, monitoring a signal from a sensor that is indicative of a dynamic force being exerted on the lower face during the pump cycle; and
(g) updating a pump cycle parameter based at least upon an analysis of the signal from the sensor; and wherein
i) during (d) the pump cycle is modified in real time in response to the signal; or
ii) updating the pump cycle includes optimizing a correlation between pump cycle parameters and a geometry of the 3D article; or
iii) the pump cycle parameter includes a vertical translation velocity during the pump cycle; or
iv) the pump cycle parameter includes a vertical translation distance D for the pump cycle.

## Patentansprüche

1. 3D-Drucker, umfassend:
ein Gefäß zum Aufnehmen eines flüssigen Harzes, wobei das Gefäß eine transparente Folie aufweist, durch die hindurch das Harz beleuchtet werden kann;
eine Light-Engine, die so angeordnet ist, dass sie durch die transparente Folie hindurch das Harz selektiv beleuchten kann;
eine Befestigung zur Stützung eines 3D-Erzeugnisses, wobei eine untere Fläche des 3D-Erzeugnisses in das Harz eingetaucht wird, wobei sie der transparenten Folie zugewandt ist;
einen Bewegungsmechanismus, um die Befestigung steuerbar verschieben zu können, wobei der vertikale Abstand zwischen der unteren Fläche des 3D-Erzeugnisses und der transparenten Folie gesteuert werden kann;
einen Sensor, der so konfiguriert ist, dass er eine dynamische vertikale Kraft auf der unteren Fläche überwachen kann;
ein Steuerungsgerät, das so konfiguriert ist, dass es:
(a) die untere Fläche des 3D-Erzeugnisses in einem Arbeitsabstand von der transparenten Folie positionieren kann;
(b) die Light-Engine so aktivieren kann, dass sie eine Schicht Harz selektiv auf der unteren Fläche härtet;
(c) (a) und (b) ein- oder mehrmals wiederholen kann; **dadurch gekennzeichnet, dass** das Steuerungsgerät weiterhin so konfiguriert ist, dass es:
(d) den Bewegungsmechanismus so aktivieren kann, dass die untere Fläche gemäß einem Pumpzyklus um einen Abstand D nach oben und dann bis zum Arbeitsabstand nach unten verschoben wird;
(e) gleichzeitig mit (d) ein Signal von dem Sensor, welches anzeigt, dass eine dynamische Kraft auf die untere Fläche des 3D-Erzeugnisses ausgeübt wird, überwachen kann;
(f) wenigstens teilweise auf der Basis einer Analyse des Signals von dem Sensor wenigstens einen Pumpzyklusparameter aktualisieren kann; und
(g) die Schritte (a) bis (f) wiederholen kann, bis das 3D-Erzeugnis fertig ist; und wobei das Steuerungsgerät so konfiguriert ist, dass es auf der Basis einer Parameterkorrelation, die den Pumpzyklus mit wenigstens der Geometrie des 3D-Artikels korreliert, den Pumpzyklus definieren kann.

2. 3D-Drucker gemäß Anspruch 1, wobei das Signal von dem Sensor analysiert wird und als Reaktion darauf die Parameterkorrelation aktualisiert wird.

3. 3D-Drucker gemäß Anspruch 2, wobei das Aktualisieren der Parameterkorrelation darauf basiert, eine Nachschlagetabelle zu modifizieren.

4. 3D-Drucker gemäß Anspruch 2, wobei das Aktualisieren der Parameterkorrelation darauf basiert, auf eine neue Nachschlagetabelle zu weisen.

5. 3D-Drucker gemäß Anspruch 2, wobei das Aktualisieren der Parameterkorrelation auf einer Einstellung eines funktionellen Parameters basiert.

6. 3D-Drucker gemäß Anspruch 2, wobei die Parameterkorrelation auf einem multiplikativen Parameter basiert, der als Reaktion auf das analysierte Signal aktualisiert wird.

7. Verfahren zur Herstellung eines 3D-Artikels unter Verwendung eines 3D-Druckers, der ein Harz enthaltendes Gefäß umfasst und an einem unteren Teil des Harzes eine transparente Folie aufweist, umfassend:
(a) Positionieren einer unteren Fläche des 3D-Artikels in der Nähe einer Bauebene oberhalb der transparenten Folie;
(b) Projizieren von gepixeltem Licht nach oben durch die transparente Folie zum selektiven Härten von Harz auf der unteren Fläche;
(c) ein- oder mehrmaliges Wiederholen von (a) und (b), **dadurch gekennzeichnet, dass** das Verfahren weiterhin die folgenden Schritte umfasst:
(d) Ausführen eines Pumpzyklus, der das Anheben der unteren Fläche bis oberhalb der Bauebene und dann das Absenken der unteren Fläche, die sie sich in der Nähe der Bauebene befindet, umfasst, wobei zwischen der unteren Fläche und der transparenten Folie Harz aufgefüllt wird;
(f) gleichzeitig mit dem Pumpzyklus Überwachen eines Signals von einem Sensor, welches anzeigt, dass während des Pumpzyklus eine dynamische Kraft auf die untere Fläche ausgeübt wird; und
(g) Aktualisieren eines Pumpzyklusparameters wenigstens auf der Basis einer Analyse des Signals von dem Sensor; und wobei
i) während d) der Pumpzyklus als Reaktion auf das Signal in Echtzeit modifiziert wird; oder
ii) das Aktualisieren des Pumpzyklus das Optimieren einer Korrelation zwischen Pumpzyklusparametern und der Geometrie des 3D-Artikels umfasst; oder
iii) der Pumpzyklusparameter eine Geschwindigkeit der vertikalen Verschiebung während des Pumpzyklus umfasst; oder
iv) der Pumpzyklusparameter eine Strecke D der vertikalen Verschiebung für den Pumpzyklus umfasst.

## Revendications

1. Imprimante 3D, comprenant :
un récipient pour contenir une résine liquide, ledit récipient ayant une feuille transparente à travers laquelle ladite résine peut être illuminée,
un moteur de lumière disposé pour illuminer sélectivement la résine à travers la feuille transparente,
un support pour supporter un article 3D de fabrication, dans laquelle une surface inférieure de l'article 3D de fabrication est plongée dans la résine en face de la feuille transparente,
un mécanisme de mouvement pour déplacer le support d'une manière contrôlée, dans laquelle la distance verticale entre la surface inférieure de l'article 3D de fabrication et la feuille transparente peut être contrôlée,
un capteur configuré pour surveiller une force verticale dynamique sur la surface inférieure,
une unité de commande configuré pour :
(a) positionner la surface inférieure dudit article 3D de fabrication dans une distance de fonctionnement de ladite feuille transparente,
(b) activer le moteur de lumière pour durcir sélectivement une couche de résine sur la surface inférieure,
(c) répéter (a) et (b) une ou plusieurs fois, **caractérisée en ce que** l'unité de commande est configurée en outre pour :
(d) activer le mécanisme de mouvement pour déplacer la surface inférieure en haut par une distance D et ensuite en bas jusqu'à la distance de fonctionnement selon un cycle de pompage,
(e) en parallèle avec d), surveiller un signal provenant du capteur qui est indicatif d'une force dynamique étant exercée sur la surface inférieure dudit article 3D de fabrication,
(f) rafraîchir au moins un paramètre de cycle de pompage, au moins partiellement basé sur une analyse du signal provenant du capteur, et
(g) répéter les étapes (a) à (f) jusqu'à ce que ledit article 3D de fabrication soit complété, et dans laquelle l'unité de commande est configurée pour définir le cycle de pompage sur la base d'une corrélation paramétrique qui met en corrélation le cycle de pompage avec au moins une géométrie dudit article 3D.

2. Imprimante 3D selon la revendication 1, dans laquelle le signal provenant du capteur est analysé, et la corrélation paramétrique est rafraîchie en réponse.

3. Imprimante 3D selon la revendication 2, dans laquelle le rafraîchissement de la corrélation paramétrique est basé sur la modification d'un tableau de référence.

4. Imprimante 3D selon la revendication 2, dans laquelle le rafraîchissement de la corrélation paramétrique est basé sur le fait de montrer un nouveau tableau de référence.

5. Imprimante 3D selon la revendication 2, dans laquelle le rafraîchissement de la corrélation paramétrique est basé sur l'ajustement d'un paramètre fonctionnel.

6. Imprimante 3D selon la revendication 2, dans laquelle la corrélation paramétrique est basé sur un paramètre multiplicatif qui est rafraîchi en réponse au signal analysé.

7. Procédé pour fabriquer un article 3D en utilisant une imprimante 3D comprenant un récipient contenant une résine, et ayant une feuille transparente sur une partie inférieure de la résine, comprenant les étapes consistant à :
(a) positionner une surface inférieure dudit article 3D proximalement à un plan de construction au-dessus de la feuille transparente,
(b) projeter une lumière pixélisée en haut à travers la feuille transparente pour durcir sélectivement de la résine sur la surface inférieure,
(c) répéter (a) et (b) une ou plusieurs fois, **caractérisée en ce que** le procédé comprend en outre les étapes consistant à :
(d) exécuter un cycle de pompage, qui comprend le fait de monter la surface inférieure au-dessus du plan de construction, et ensuite descendre la surface inférieure pour être proximale au plan de construction, dans lequel de la résine est remise à niveau entre la surface inférieure et la feuille transparente,
(f) simultanément avec le cycle de pompage, surveiller un signal provenant d'un capteur, qui est indicatif d'une force dynamique étant exercée sur la surface inférieure pendant le cycle de pompage, et
(g) rafraîchir un paramètre de cycle de pompage au moins sur la base d'une analyse du signal provenant du capteur, et dans lequel
i) pendant (d) le cycle de pompage est modifié en temps réel en réponse au signal, ou
ii) le rafraîchissement du cycle de pompage comprend l'optimisation d'une corrélation entre des paramètres de cycle de pompage et une géométrie de l'article 3D, et
iii) ledit paramètre de cycle de pompage comprend une vélocité de déplacement vertical pendant le cycle de pompage, ou
iv) ledit paramètre de cycle de pompage comprend une distance de déplacement vertical D pour le cycle de pompage.
